# EUROPEAN PATENT SPECIFICATION

(11) **EP 2 863 182 B1**
(45) Date of publication and mention of the grant of the patent: **11.01.2017**
(21) Application number: 13189050.1
(22) Date of filing: 17.10.2013
(51) Int. Cl.: G01D 4/00, H04W 4/00, H04W 4/20

(54) **System and method for utility meter activation**
System und Verfahren zur Aktivierung von Verbrauchszählern
Système et procédé d'activation de compteur utilitaire

(43) Date of publication of application: 22.04.2015
(73) Proprietor: General Electric Company, Schenectady, NY 12345 (US)
(72) Inventor: Bharat, Bruce Amarnauth, Atlanta, GA 30339-8402 (US); Yasko, Christopher Charles, Milton, GA 30004 (US)
(74) Representative: Illingworth-Law, William Illingworth

(56) References cited:
- US-A- 5 805 442
- US-A1- 2005 065 742
- US-A1- 2008 109 537

## Description

The subject matter disclosed herein relates to activating sensors, such as utility meters for a power, water, gas, or other utility distribution network.

Certain utility networks, such as power, water, and gas distribution networks, may include a number of sensors distributed throughout the network in communication with a centralized control system. For example, a power distribution network may include a number of meters (e.g., "smart" meters) disposed at customer locations throughout the network to monitor the consumption of power. Furthermore, these meters may communicate with a centralized control system, which may use the monitoring data collected by the meter to, for example, determine each customer's monthly utility bill. Accordingly, it may be desirable for the meters and the centralized control system to be communicatively coupled to exchange information.

US 2008/109537 describes a method for automatic configuration of digital devices, comprising pre-producing a plurality of digital devices, comprising integrated module components, configured for communication with a data management system via a wireless network and further configured for monitoring capability, producing a list file associated with the plurality of digital devices, the list file including identities for each integrated module component, activating a digital device, from the plurality of digital devices, using the wireless network and distributing deployment information to the digital device from at least one configuration server via the wireless network, the deployment information including customer data for configuring the digital device and for registering the digital device with a transaction management system.

The present invention resides in a utility network, a method and a computer program as defined in the appended claims.

These and other features, aspects, and advantages of the present invention will become better understood when the following detailed description is read with reference to the accompanying drawings in which like characters represent like parts throughout the drawings, wherein:
FIG. 1 is a block diagram of a power distribution network, in accordance with an embodiment of the present approach;
FIG. 2 is a block diagram illustrating certain internal components of a meter, access point, AMI system, and mobile device of the power distribution network illustrated in FIG. 1, in accordance with an embodiment of the present approach;
FIG. 3 is a flow diagram illustrating a process by which a meter is activated, from the perspective of the meter, in accordance with an embodiment of the present approach;
FIG. 4 is a flow diagram illustrating a process, from the perspective of the access point of FIG. 2, by which a new meter is activated, in accordance with an embodiment of the present approach;
FIG. 5 is a flow diagram illustrating a process, from the perspective of the mobile device of FIG. 2, by which a new meter is activated, in accordance with an embodiment of the present approach;
FIG. 6 is a flow diagram illustrating a process by which the mobile device of FIG. 2 may update the installer, in accordance with an embodiment of the present approach; and
FIG. 7 is a flow diagram illustrating a process, from the perspective of the AMI system 30 of FIG. 2, by which a new meter is activated, in accordance with an embodiment of the present approach.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As set forth above, it may be desirable for the sensors and the centralized control system of a network (e.g., a power, water, or gas distribution network, or other suitable utility network) to be communicatively coupled to one another to exchange information. For example, it may be desirable to communicatively couple a sensor (e.g., a "smart" meter) and a centralized controller (e.g., an Advanced Metering Infrastructure (AMI) system) of a power distribution network. Accordingly, during installation of the meter, it may be desirable for an installer to ensure that the meter is in communication with the AMI system. However, since it may take minutes to hours to establish communication, it may not be efficient for an installer to wait for communication to be established after installing a meter. Furthermore, as discussed below, allowing the installer to directly communicate with the meter (e.g., via an electrical device) may also introduce opportunity for unauthorized access of the meter.

Accordingly, present embodiments are directed toward systems and methods for establishing communication between a sensor (e.g., a "smart" utility meter) and a centralized system (e.g., an AMI system) of a utility network (e.g., a power distribution network). For example, present embodiments enable an installer to utilize a mobile device (e.g., a laptop or cell phone) to notify an AMI system of a meter's physical installation as well as to receive updates from the AMI system regarding the meter's activation status. Additionally, present embodiments include an access point that communicatively couples the meters to the centralized system (e.g., the AMI system) of the utility network. As set forth below, the meter, access point, and centralized system may cooperate to activate the meter (e.g., establish communication between the meters and the centralized systems via the access points). As set forth below, present embodiments enable the activation of meters without an installer having to directly communicate with the sensor, which may help to limit unauthorized access of the meter. Furthermore, present embodiments improve the efficiency of meter installation by enabling an installer to notify the centralized system of the physical installation a new meter from a mobile device and allowing the installer to proceed to the next physical installation without waiting for communication to be established.

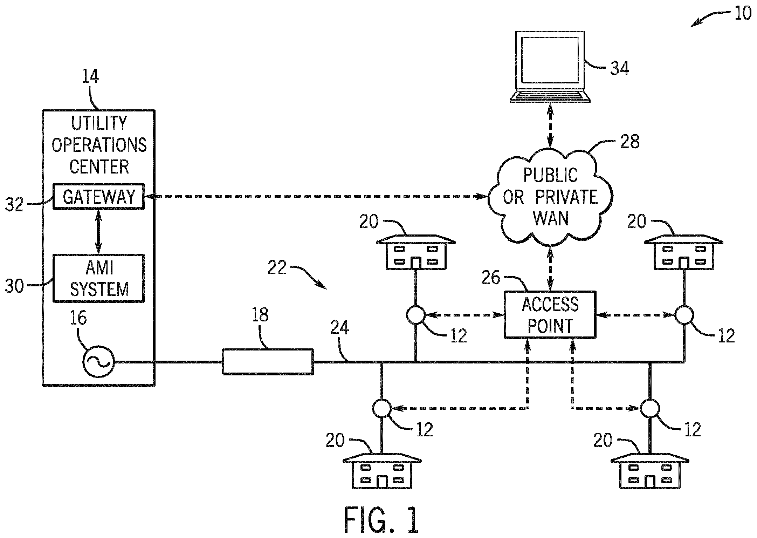

With the foregoing in mind, FIG. 1 illustrates an embodiment of a network, power distribution network 10, which enables an installer to efficiently and securely activate sensors (e.g., "smart" utility meters 12) within the power distribution network 10. Accordingly, the power distribution network 10 may include a utility operation center 14, which may operate a power source 16 (e.g., a coal, gas, or nuclear power plant, a main transmission line from a power plant, or other suitable power source). Further, the power distribution network 10 may include a number of other electrical components 18 (e.g., transformers, capacitors, converters, switches, transmission lines, and so forth) suitable for the transmission and/or conversion of power being supplied by the power source 16 to render the power suitable for use at a number of customer locations 20 (e.g., residential or commercial locations).

In particular, the power distribution network 10 illustrated in FIG. 1 includes a segment 22 of a larger power distribution network 10. The illustrated segment 22 includes a transmission line 24 that couples each of the customer locations 20 to the power distribution network 10. More specifically, each customer location 20 includes a sensor (e.g., a "smart" utility meter 12) disposed between the customer location 20 and the transmission line 24. As set forth in detail below, "smart" meters 12 may include a memory and a processor capable of performing a number of functions by executing one or more instructions. For example, the illustrated meters 12 include sensors to determine power consumption at each of the customer locations 20. Further, the meters 12 include one or more network interface devices to enable the meter to communicate with other devices. For example, in certain embodiments, the meters 12 may also be capable of communicating with a remote system to determine a current price for power, an average price for power over a period of time, a total amount of power consumed at a customer location 20 over a period of time, and so forth.

Specifically, the meters 12 illustrated in FIG. 1 are communicatively coupled to an access point 26. In certain embodiments, the access point 26 may be a dedicated utility access point 26 (e.g., dedicated to providing a communication bridge for the meters 12). In other embodiments, the access point 26 may be a general purpose wireless access point. As illustrated in FIG. 1, the meters 12 may be equipped with one or more wireless network interface devices and may be wirelessly coupled to the access point 26. In certain embodiments, the meters 12 and the access point 26 may wirelessly communicate using a standard wireless protocol (e.g., 802.x, Bluetooth™, Zigbee, code division multiple access (CDMA), or other suitable wireless protocol). In other embodiments, the access point 26 may be coupled to the transmission line 24 and may communicate with the meters 12 using the transmission line 24 via a power line communication technique (e.g., broadband over powerline (BPL), or other suitable power line communication technique). Furthermore, as discussed below, communication between the access point 26 and the meters 12 may, in certain embodiments, be based on a proprietary communication technique for which hardware may not be widely available. Additionally, in certain embodiments, communication between the access point 26 and the meters 12 may be encrypted or otherwise secured to prevent unauthorized access.

Furthermore, the illustrated access point 26 is capable of communicating over a public or private wide area network (WAN) 28. For example, the illustrated access point 26 include one or more wireless network interface devices to enable the access point 26 to couple to and communicate over the WAN 28. In certain embodiments, the WAN 28 may be a public WAN 28, such as a WAN 28 of cellular data towers in a cellular data network. As such, in certain embodiments, the access point 26 may connect to the WAN 28 of the cellular data network in order to exchange data with other systems across the WAN 28. It should be appreciated that the WAN 28 may also represent a connection to any number of networks (e.g., the Internet) to facilitate communication between the access point 26 and other systems. In other embodiments, the WAN 28 may be a private WAN, such as a WAN that is operated and controlled by the utility operation center 14 (e.g., specifically for the exchange of utility data).

The access point 26 illustrated in FIG. 1 is communicatively coupled to an AMI system 30 disposed at the utility operation center 14 via the WAN 28. More specifically, the access point 26 and the AMI system 30 may exchange information (e.g., packets of data) with one another via the gateway 32 and the WAN 28. Accordingly, in certain embodiments, the access point 26 may have Internet access via a connection to the WAN 28 (e.g., a cellular data WAN 28) and the gateway 32 may also have a wired or wireless Internet connection. Accordingly, the access point 26 may route information over the Internet (or over a private network) to the gateway 32, such that the information may be received by the AMI system 30. It should be appreciated that, in certain embodiments, the access point 26 and the gateway 32 or the AMI system 30 may exchange suitable security credentials (e.g., security certificates or keys) to verify their respective identities and, in some embodiments, to establish an encrypted communication channel between the devices for enhanced security.

For example, one function of the power distribution network 10 illustrated in FIG. 1 is remote meter reading. That is, the "smart" utility meters 12 of the power distribution network 10 are capable of determining, storing, and communicating an amount of power consumed at each customer location 20 in the power distribution network 10. To provide this information to the AMI system 30, the illustrated meters 12 may first relay information (e.g., one or more data packets) to the access point 26, which may, in turn, route the information through the WAN 28 (e.g., the Internet) and the gateway 32 to reach the AMI system 30. In certain embodiments, the meters 12 may relay monitoring information to the AMI system 30 periodically or based on a request received from the AMI system 30 (e.g., via the gateway 32, WAN 28, and access point 26, respectively). It should be appreciated that, in certain embodiments, the meters 12 and the gateway 32 or the AMI system 30 may exchange suitable security credentials (e.g., security certificates or keys) to ensure their respective identities and, in some embodiments, to establish an encrypted communication channel between the devices for enhanced security.

As such, when a new meter 12 is added to the power distribution network 10, the new meter 12 is first physically installed (e.g., physically disposed between the transmission line 24 and the customer location 20 by an installer) and subsequently activated. "Activation" of a meter 12, as used herein, may generally refer to establishing a communication link (e.g., channel or route) between the meter 12 and the AMI system 30. As such, after physically installing a new meter 12, an installer may begin an activation process to communicatively couple the meter 12 and AMI system 30.

However, it may be desirable to prevent (e.g., deter, mitigate, or otherwise lessen) unauthorized access to the meters 12. That is, since there may be financial motivation to alter the behavior and/or contents of the meter 12 (e.g., to alter an amount of power consumed at a particular customer location 20), it may be desirable to have the meters 12 communicate with the access point 26 using an uncommon or proprietary protocol and/or hardware. Accordingly, in order to communicate with the meters 12, in certain embodiments, the access point 26 may be equipped with a complementary network interface device to communicate using the uncommon or proprietary protocol and/or hardware. Furthermore, in certain embodiments, the access point 26 and the meters 12 may communicate using an encrypted communication channel, and may further utilize an exchange of security credentials (e.g., security certificates or keys installed on the access point 26 and the meters 12 upon manufacturing or installation) to verify the identities of both the access point 26 and the meters 12.

Furthermore, in order to further enhance security, in certain embodiments, the power distribution network 10 illustrated in FIG. 1 may enforce a policy to not allow any device to communicate directly with the meter 12 except for the access point 26. As such, in certain embodiments, an installer installing a new meter 12 in the power distribution network 10 may not carry or use a device that directly communicates with the new meter 12. Instead, as set forth in detail below, present embodiments enable an installer to use a mobile device 34 (e.g., communicatively coupled to the AMI system 30 via the WAN 28) to activate a new meter 12 without directly communicating with the new meter 12. By avoiding the use of a device configured to directly interface with the meters 12 in the field, present embodiments reduce the possibility for unauthorized meter access in the power distribution network 10. Furthermore, in certain embodiments, the meters 12, the access point 26, or both, may be configured to detect unauthorized access (e.g., an attempt to modify the contents of the memory of the meter 12) or unauthorized communication, may notify the server 30 of the unauthorized access or unauthorized communication

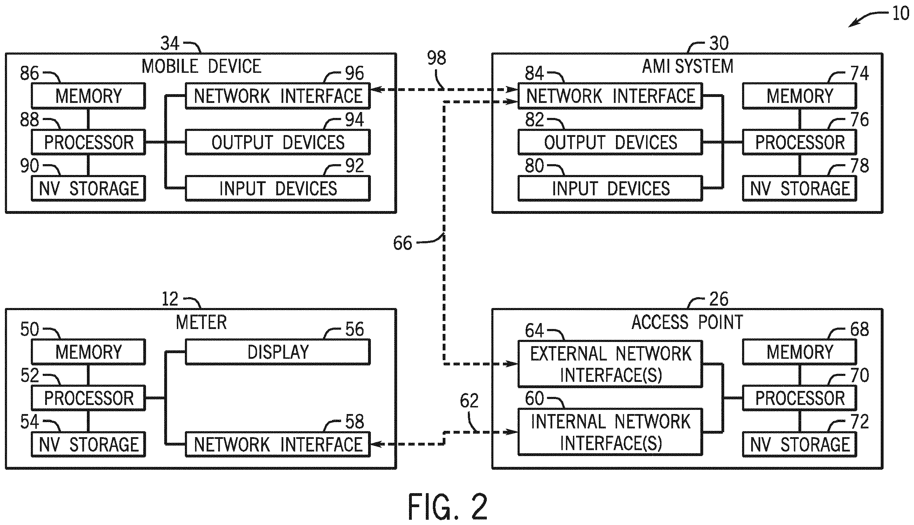

FIG. 2 illustrates certain internal components of an embodiment of the power distribution network 10 illustrated in FIG. 1. In particular, FIG. 2 illustrates certain internal components of the meter 12, the access point 26, the AMI system 30, and the mobile device 34, for an embodiment of the power distribution network 10. These illustrated components enable an installer to activate sensors (e.g., "smart" meters 12) within the power distribution network 10 in an efficient and secure manner. As set forth above, the meter 12, the access point 26, the AMI system 30, and the mobile device 34 may cooperate with one another in order to activate a new meter 12 in the power distribution network 10.

The new meter 12 illustrated in FIG. 2 is a "smart" meter, which includes a memory 50 (e.g., random access memory (RAM), read-only memory (ROM), or other suitable memory) and a processor 52 (e.g., any suitable microprocessor) capable of respectively storing and executing instructions. The meter 12 may also include nonvolatile (NV) storage 54 (e.g., a hard drive, solid-state disk (SSD), flash drive, or other suitable nonvolatile storage) that may, for example, store values measured and/or determined by the meter 12. For example, the meter 12 may execute instructions using the processor 52 to determine an amount of power consumed at a particular customer location 20, and may store this value in NV storage 54 for later use. Additionally, in certain embodiments, the meter 12 may include a display 56 that may be used (e.g., by the processor 52) to display information to the installer and/or customer. Furthermore, the illustrated meter 12 includes a network interface 58 that enables communication with at least one access point 26. As set forth above, in certain embodiments, the network interface device 58 may be an uncommon or proprietary network interface device, in addition or in alterative to various encryption and identity verification techniques (e.g., certificate exchanges), to make unauthorized network access of the meter 12 more difficult.

The access point 26 illustrated in FIG. 2 also includes memory 68 (e.g., random access memory (RAM), read-only memory (ROM), or other suitable memory), processor 70 (e.g., any suitable microprocessor), and nonvolatile (NV) storage 72 (e.g., a hard drive, solid-state disk (SSD), flash drive, or other suitable nonvolatile storage). As such, the access point 26 is generally capable of storing and executing instructions. Additionally, the access point 26 includes one or more internal network interfaces 60 for interfacing with one or more meters 12. In certain embodiments, each internal network interface 60 may communicatively couple to a single meter 12, while, in other embodiments, each internal network interface 60 may communicatively couple with multiple meters 12. As mentioned above, in certain embodiments, communication 62 between the meter 12 and the access point 26 may occur wirelessly or via a wired connection (e.g., using a power line communication technique). Furthermore, the access point 26 includes one or more external network interfaces 64 that are capable of coupling the access point 26 to the AMI system 30. As set forth above, communication 66 between the access point 26 and the AMI system 30 may occur wirelessly and/or via a wired connection in the WAN 28. In certain embodiments, the access point 26 may be equipped with multiple or redundant external network interfaces 64 (e.g., a primary wireless network interface to a cellular data WAN 28 and a secondary wired Internet connection) for use in load balancing and/or failover situations.

The AMI system 30 illustrated in FIG. 2 also includes memory 74 (e.g., random access memory (RAM), read-only memory (ROM), or other suitable memory), processor 76 (e.g., any suitable microprocessor), and nonvolatile (NV) storage 78 (e.g., a hard drive, solid-state disk (SSD), flash drive, or other suitable nonvolatile storage) for use in storing and executing instructions to control the power distribution network 10. The illustrated AMI system 30 also includes input devices 80 (e.g., mice, keyboards, touchpad, touchscreens, microphones, and/or other suitable input devices) and output devices 82 (e.g., monitors, liquid crystal displays (LCDs), touchscreens, speakers, printers, and/or other suitable output devices) to facilitate user interaction with the AMI system 30. Furthermore, the illustrated AMI system 30 includes at least one network interface 84 capable of facilitating communication between the AMI system 30 and the access point 26, as well as between the AMI system 30 and the mobile device 34. Accordingly, in certain embodiments, the network interface 84 of the AMI system 30 may be coupled to a gateway (e.g., gateway 32 illustrated in FIG. 1), which, in turn, is coupled to a WAN (e.g., the Internet).

The mobile device 34 illustrated in FIG. 2 may be a laptop, tablet, handheld electronic device, cell phone, or other suitable mobile electronic device 34 capable of communicating with the AMI system 30. The illustrated mobile device 34 includes memory 86 (e.g., random access memory (RAM), read-only memory (ROM), or other suitable memory), processor 88 (e.g., any suitable microprocessor), and nonvolatile (NV) storage 90 (e.g., a hard drive, solid-state disk (SSD), flash drive, or other suitable nonvolatile storage) for use in storing and executing instructions. Additionally, the illustrated mobile device 34 includes input devices 92 (e.g., mice, keyboards, touchpad, touchscreens, microphones, and/or other suitable input devices) and output devices 94 (e.g., monitors, liquid crystal displays (LCDs), touchscreens, speakers, printers, and/or other suitable output devices) to facilitate installer interaction with the mobile device 34. Furthermore, the illustrated mobile device 34 includes at least one network interface 96 capable of communication 98 with the AMI system 30. For example, in certain embodiments, the network interface 96 of the mobile device 34 may be a wireless network interface (e.g., 802.x, CDMA, or other suitable wireless network interface) or a wired network interface (e.g., Ethernet or other suitable wired network interface) that provides the mobile device 34 with a network connection (e.g., an Internet connection) for communication 98 to the AMI system 30.

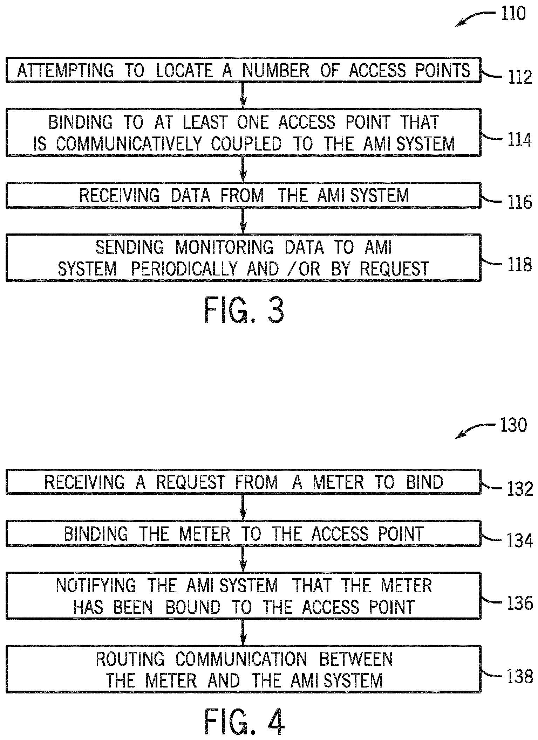

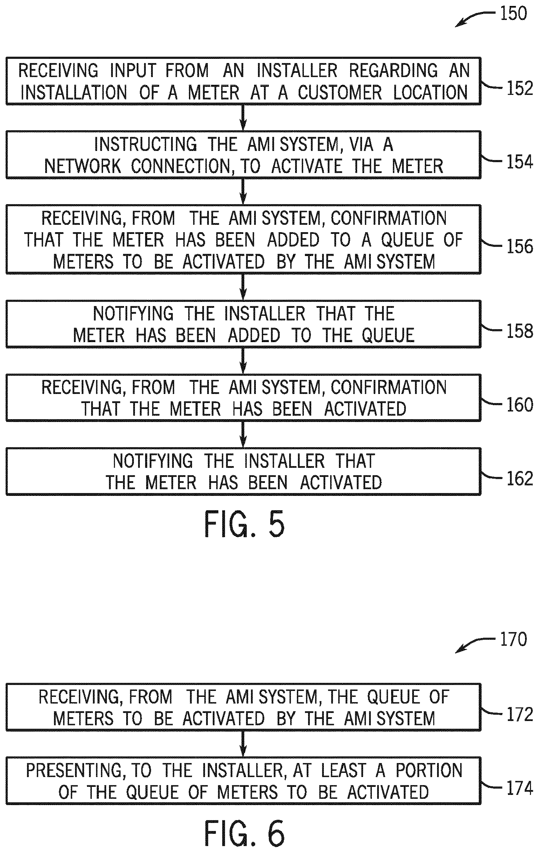

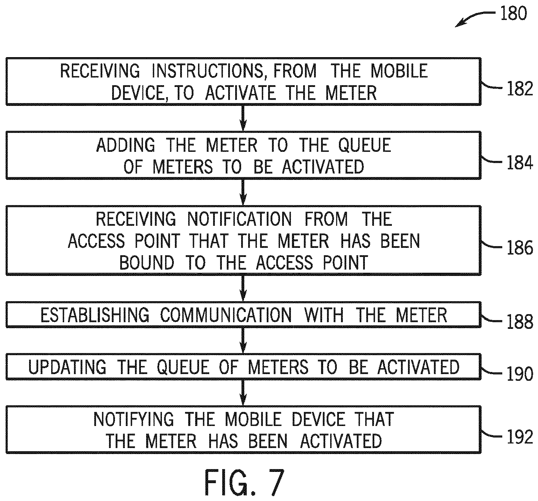

With the foregoing in mind, FIGS. 3-7 illustrate embodiments of processes that may be executed by the various components of the power distribution network 10 (illustrated in FIGS. 1 and 2) when activating a new meter 12 in the power distribution network 10. In particular, FIG. 3 illustrates a process that may be executed by the meter 12 (e.g., processor 52 of the meter 12), FIG. 4 illustrates a process that may be executed by the access point 26 (e.g., processor 70 of the access point 26), FIGS. 5 and 6 illustrates processes that may be executed by the mobile device 34 (e.g., processor 88 of mobile device 34), and FIG. 7 illustrates a process that may be executed by the AMI system 30 (e.g., processor 76 of the AMI system 30). It should be appreciated that certain steps illustrated in FIGS. 3-7 may, in certain embodiments, be executed concurrently and/or in other orders.

For example, FIG. 3 illustrates an embodiment of a process 110, from the perspective of a new meter 12, whereby the new meter 12 may be activated. That is, the process 110 may be executed by the processor 52 of the new meter 12 during activation. The illustrated process 110 begins with the new meter 12 attempting (block 112) to locate a number of access points 26. For example, the meter 12 may scan particular channels and/or broadcast on particular channels (e.g., wired or wireless) to locate one or more nearby access points 26 in the power distribution network 10. Subsequently, the meter 12 may bind (block 114) to at least one access point 26, in which the access point 26 is communicatively coupled to the AMI system 30 (e.g., via the WAN 28 and/or gateway 32 illustrated in FIG. 1). Once bound to (e.g., associated with or connected to) the access point 26, the meter 12 may be communicatively coupled to the access point 26. At some point after binding to the access point 26, the meter 12 may receive (block 116) data from the AMI system 30 to confirm activation of the meter 12. Then, having been activated, the meter 12 may send (block 118) monitoring data to the AMI system 30 periodically and/or by request of the AMI system 30.

FIG. 4 illustrates an embodiment of a process 130, from the perspective of the access point 26, whereby the new meter 12 may be activated. That is, the process 130 may be executed by the processor 70 of the access point 26 during activation of the new meter 12. The illustrated process 130 begins with the access point 26 receiving (block 132) a request from a meter to bind to (e.g., communicatively couple to and/or establish a connection with) the access point 26. For example, the access point 26 may detect the new meter 12 scanning and/or broadcasting on a particular wired or wireless channel. Subsequently, the access point 26 may bind (block 134) to the new meter 12. After binding to the new meter 12, the access point 26 may notify (block 136) the AMI system that the meter 12 has been bound to the access point 26. That is, the access point 26 may use communication 68 illustrated in FIG. 2 (e.g., including WAN 28 and/or gateway 32 illustrated in FIG. 1) to send information (e.g., one or more data packets) to the AMI system 30, such that the AMI system 30 may record the connection between the meter 12 and the access point 26. After notifying the AMI system 30, the access point 26 may proceed to route (block 138) communication between the activated meter 12 and the AMI system 30.

FIG. 5 illustrates an embodiment of a process 150, from the perspective of the mobile device 34, whereby a new meter 12 may be activated in the power distribution network 10. That is, the process 150 may be executed by the processor 88 of the mobile device 34 during activation of the new meter 12. The illustrated process 150 begins with the mobile device 34 receiving (block 152) input from an installer regarding an installation of a new meter at a customer location 20. For example, the memory 86 and processor 88 of the mobile device 34 may respectively store and execute a user interface that the installer may use (e.g., via input devices 92 and output devices 94) to enter information about the installation of the new meter 12. By specific example, the user interface may allow the installer to enter information such as the physical location of the new meter 12, an identification number for the new meter 12, model information for the new meter 12, rating information for the new meter 12, time and date of new meter installation, and/or other suitable information regarding the new meter 12.

Continuing through the illustrated process 150, after receiving input from the installer (e.g., via a user interface), the mobile device 34 may instruct (block 154) the AMI system 30, via network connection 98, to activate the new meter 12. As set forth above, in certain embodiments, the instructions from the mobile device 34 may traverse the public or private WAN 28 illustrated in FIG. 1 to reach the AMI system 30. At some point after instructing the AMI system 30 to activate the meter 12, the mobile device 34 may receive (block 156), from the AMI system 30, confirmation that the meter 12 has been added to a queue (e.g., a list or other suitable data structure) of meters to be activated. For example, the mobile device 34 may receive information (e.g., one or more data packets) from the AMI system 30 denoting a time at which the new meter 12 was added to the queue. Then, the mobile device 34 may notify (block 158) the installer that the meter 12 has been added to the queue of meters to be activated. Subsequently, the mobile device 34 may receive (block 160), from the AMI system 30, confirmation that the meter has been activated. Accordingly, the mobile device 34 may notify (block 162) the installer that the meter 12 has been activated. In other embodiments, rather than receiving confirmation of the meter's successful activation (e.g., in block 160), the mobile device 34 may instead receive a notification if the meter 12 was not successfully activated (e.g., a failure notification), and the mobile device 34 may subsequently notify the installer that the meter 12 was not successfully activated.

In certain embodiments, the mobile device 34 may receive more information from the AMI system 30 regarding the queue of meters 12 to be activated. That is, in certain embodiments, the steps 156, 158, 160, and 162 of the process 150 illustrated in FIG. 5 may be substituted by the process 170 illustrated in FIG. 6. Accordingly, after instructing the AMI system 30 to activate the meter 12 (e.g., in block 154 of the process 150) the mobile device 34 may receive (block 172), from the AMI system 30, the queue of meters to be activated by the AMI system 30. For example, in certain embodiments, the mobile device 34 may receive a queue that includes all meters awaiting activation by the AMI system 30. Subsequently, the mobile device 34 may present (block 174), to the installer, at least a portion of the received queue of meters 12 to be activated by the AMI system 30. In certain embodiments, the mobile device 34 may present to the installer a subset of the queue of new meters 12 awaiting activation by the AMI system 30 (e.g., only meters 12 queued by the installer, only meters 12 queued within a particular time frame, only meters 12 that have been successfully activated, only meters 12 that have failed to successfully activate, and so forth). Furthermore, in certain embodiments, the steps 172 and 174 of the process 170 may periodically repeat (e.g., every few minutes, every few hours, every few days, or with other suitable frequency) such that the installer may be able to determine the activation status of the new meter 12.

FIG. 7 illustrates an embodiment of a process 180, from the perspective of the AMI system 30, whereby a new meter 12 may be activated. That is, the process 180 may be executed by the processor 76 of the AMI system 30 during activation of the new meter 12. The illustrated process 180 begins with the AMI system 30 receiving (block 182) instructions, from the mobile device 34, to activate the new meter 12 (e.g., via communication 98). In certain embodiments, the AMI system 30 may verify one or more security credentials (e.g., username/password, certificate, or other suitable credential) of the mobile device 34 and/or the installer before proceeding. Subsequently, the AMI system 30 may add (block 184) the meter 12 to the queue of meters to be activated (e.g., stored in the memory 74 and/or NV storage 78 of the AMI system 30). At some point, the AMI system 30 may receive (block 186) notification from the access point 26 that the meter 12 has been bound to the access point 26. It should be appreciated that, in certain embodiments, block 186 may occur before blocks 184 and/or 182.

Continuing through the process 180 illustrated in FIG. 7, after adding the meter 12 to the queue and receiving notification from the access point 26 that the meter 12 has been bound, the AMI system 30 may establish (block 188) communication with the meter 12 (e.g., activate the meter 12). As mentioned above, communication between the AMI system 30 and the meter 12 may traverse the public or private WAN 28 and/or gateway 32. After establishing communication with the meter 12, the AMI system 30 may update (block 190) the queue of meters to be activated. Further, in certain embodiments, the AMI system 30 may notify (block 192) the mobile device 34 that the meter 12 has been activated. In certain embodiments, the AMI system 30 may provide to the mobile device 34 information (e.g., time of activation, any errors or warnings encountered, or other suitable information) related to the activation of the meter 12. In other embodiments, rather than providing confirmation of the meter's successful activation (e.g., in block 192), the AMI system 30 may instead provide a notification if the meter 12 was not successfully activated (e.g., communication with the meter 12 was not established in block 188).

Technical effects of the present approach include enabling an installer to efficiently and securely activate sensors, such as "smart" utility meters 12, within a utility network (e.g., a power, water, gas or similar utility network). That is, present embodiments improve the efficiency of sensor installation by enabling an installer to notify the centralized system (e.g., the AMI system) of the physical installation of a new sensor (e.g., a new meter 12) from a mobile device and allowing the installer to proceed to the next physical installation without waiting for communication to be established. Furthermore, present embodiments enable the activation of sensors (e.g., meters 12) in the network (e.g., power distribution network 10) without requiring the installer to directly communicate with the sensor, reducing the potential for unauthorized access of the sensors.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims.

## Claims

1. A utility network (10), comprising:
a utility meter (12) configured to measure a property of the network (10) once installed and to communicate the measurement to a server (30) once activated;
an access point (26) configured to communicatively couple to the utility meter (12) and configured to notify the server (30) when the utility meter (12) has been bound to the access point (26); and
a server (30) communicatively coupled to the access point (26);
a mobile device (34) configured to communicatively couple to the server (30) and to receive input from a user regarding installation of the utility meter (12) at a customer location (20);
wherein the server (30) configured to receive a notification from the access point (26) that the utility meter (12) has been installed and has been bound to the access point (26), to receive a request from a user via a mobile device (34) to activate the utility meter, to add the utility meter (12) to a queue of utility meters to be activated, and upon activation of the utility meter (12), to send a response to the user via the mobile device (34) of the activation status of the utility meter (12)

2. The network of claim 1, wherein the server (30) is configured to activate the queue of utility meters.

3. The network of claim 1 or claim 2, wherein the mobile device (34) is configured to receive periodic updates relating to at least a portion of the queue of utility meters awaiting activation from the server (30).

4. The network of claim 1, 2 or 3, wherein the utility meter (12) and the access point (26) are configured to communicatively couple to one another using a wired, wireless, or using a power-line communication technique.

5. The network of any preceding claim, wherein the utility meter (12) is configured to directly bind to the access point (26) only and not to other devices.

6. The network of any preceding claim, wherein the utility meter (12) and the access point (26) are configured to communicate with one another over an encrypted channel after exchanging security credentials.

7. The network of any preceding claim, wherein the access point (26) and the server (30) are configured to communicatively couple to one another via a private wide area network (WAN), a cellular data WAN, or a combination thereof.

8. The network of any preceding claim, wherein the utility meter (12), the access point (26), or both, are configured to detect unauthorized access or unauthorized communication, and configured to notify the server (30) of the unauthorized access or unauthorized communication.

9. The network of any preceding claim, wherein the server (30) comprises an advanced metering infrastructure (AMI) server.

10. The network of any preceding claim, wherein the utility meter (12) comprises a power meter and the network (10) comprises a power distribution network.

11. A method, comprising:
receiving in a mobile device (34), input from a user regarding installation of the utility meter (12) at a customer location (20) in a network;
receiving (182) instructions from the mobile device (34) at a remote server (30), to activate the utility meter (12) that has been installed in a network;
adding (184) the utility meter (12) to a queue of utility meters to be activated;
receiving (186) notification from an access point (26) that the utility meter (12) has been bound to the access point (26);
activating the utility meter (12), wherein activating the utility meter comprises establishing (188) communication with the utility meter (12) via the access point (26); and
periodically communicating updated data to the mobile device (34) relating to the queue of utility meters to be activated to indicate an activation status of the utility meter (12).

12. The method of claim 11, wherein the activation status of the utility meter (12) comprises successfully activated, unsuccessfully activated, and pending.

13. The method of claim 11 or 12 wherein the mobile device (34) is not configured to bind to the utility meter.

14. The method of claim 11, 12 or 13, wherein:
receiving (186) notification from the access point (26) comprises receiving information from the access point (26) via a public or private wide area network, and/or
activating the utility meter (12) comprises sending activation information to the utility meter (12).

15. A computer program comprising computer program code adapted to perform the method of any of claims 11 to 14, when executed by computer processors (52, 70, 76, 88) associated with each of the utility meter (12), the access point (2 6) , the mobile device (34) and the server (30).

## Patentansprüche

1. Versorgungsnetz (10), umfassend:
ein Versorgungsmessgerät (12), das zum Messen einer Eigenschaft des Netzes (10), sobald es eingerichtet ist, und zum Kommunizieren des Messung an einen Server (30), sobald es aktiviert ist, konfiguriert ist;
einen Zugangspunkt (26), der zum kommunikationstechnischen Verkoppeln des Versorgungsmessgeräts (12) konfiguriert ist und zum Benachrichtigen des Servers (30), wenn das Versorgungsmessgerät (12) an den Zugangspunkt (26) gebunden wurde, konfiguriert ist; und
einen Server (30), der kommunikationstechnisch an den Zugangspunkt (26) gekoppelt ist;
ein Mobilgerät (34), das zum kommunikationstechnischen Ankoppeln an den Server (30) und zum Empfangen einer Eingabe von einem Benutzer hinsichtlich Einrichtung des Versorgungsmessgeräts (12) an einem Kundenstandort (20) konfiguriert ist;
wobei der Server (30) zum Empfangen einer Benachrichtigung vom Zugangspunkt (26), dass das Versorgungsmessgerät (12) eingerichtet wurde und an den Zugangspunkt (26) angebunden wurde, zum Empfangen einer Anforderung von einem Benutzer über ein Mobilgerät (34) zum Aktivieren des Versorgungsmessgeräts, zum Hinzufügen des Versorgungsmessgeräts (12) zu einer Warteschlange von Versorgungsmessgeräten, die aktiviert werden sollen, und, nach der Aktivierung des Versorgungsmessgeräts (12), zum Senden einer Antwort zum Aktivierungsstatus des Versorgungsmessgeräts (12) an den Benutzer über das Mobilgerät (34) konfiguriert ist.

2. Netz nach Anspruch 1, wobei der Server (30) zum Aktivieren der Warteschlange von Versorgungsmessgeräten konfiguriert ist.

3. Netz nach einem der Ansprüche 1 oder 2, wobei das Mobilgerät (34) zum periodischen Empfangen von Aktualisierungen bezüglich zumindest eines Anteils der Warteschlange von Versorgungsmessgeräten, die auf Aktivierung vom Server (30) warten, konfiguriert ist.

4. Netz nach einem der Ansprüche 1, 2 oder 3, wobei das Versorgungsmessgerät (12) und der Zugangspunkt (26) zum kommunikationstechnischen Ankoppeln aneinander unter Benutzung einer verdrahteten, drahtlosen oder unter Benutzung einer Powerline-Anschluss-Technik konfiguriert sind.

5. Netz nach einem der vorhergehenden Ansprüche, wobei das Versorgungsmessgerät (12) zum direkten Anbinden nur an den Zugangspunkt (26) und nicht an andere Geräte konfiguriert ist.

6. Netz nach einem der vorhergehenden Ansprüche, wobei das Versorgungsmessgerät (12) und der Zugangspunkt (26) zum Kommunizieren miteinander über einen verschlüsselten Kanal nach dem Austauschen von Sicherheitsberechtigungsnachweisen konfiguriert sind.

7. Netz nach einem der vorhergehenden Ansprüche, wobei der Zugangspunkt (26) und der Server (30) zum kommunikationstechnischen Ankoppeln aneinander über ein privates Weitbereichsnetz (WAN), ein zellulares Daten-WAN oder eine Kombination davon konfiguriert sind.

8. Netz nach einem der vorhergehenden Ansprüche, wobei das Versorgungsmessgerät (12), der Zugangspunkt (26) oder beide zum Erkennen von unbefugtem Zugang oder unbefugter Kommunikation konfiguriert sind und zum Benachrichtigen des Servers (30) über den unbefugten Zugang oder die unbefugte Kommunikation konfiguriert sind.

9. Netz nach einem der vorhergehenden Ansprüche, wobei der Server (30) einen Advanced Metering Infrastructure- (AMI-) Server umfasst.

10. Netz nach einem der vorhergehenden Ansprüche, wobei das Versorgungsmessgerät (12) einen Stromzähler umfasst und das Netz (10) ein Stromverteilungsnetz umfasst.

11. Verfahren, umfassend:
Empfangen, in einem Mobilgerät (34), einer Eingabe eines Benutzers bezüglich Einrichtung des Versorgungsmessgeräts (12) an einem Kundenstandort (20) in einem Netz;
Empfangen (182) von Anweisungen vom Mobilgerät (34) an einem Remote-Server (30) zum Aktivieren des Versorgungsmessgeräts (12), der in einem Netz eingerichtet wurde;
Hinzufügen (184) des Versorgungsmessgeräts (12) zu einer Warteschlange von Versorgungsmessgeräten, die aktiviert werden sollen;
Empfangen (186) einer Benachrichtigung von einem Zugangspunkt (26), dass das Versorgungsmessgerät (12) an den Zugangspunkt (26) angebunden wurde;
Aktivieren des Versorgungsmessgeräts (12), wobei das Aktivieren des Versorgungsmessgeräts das Herstellen (188) von Kommunikation mit dem Versorgungsmessgerät (12) über den Zugangspunkt (26) umfasst;
periodisches Kommunizieren von aktualisierten Daten an das Mobilgerät (34) bezüglich der Warteschlange von Versorgungsmessgeräten, die aktiviert werden sollen, zum Anzeigen eines Aktivierungsstatus des Versorgungsmessgeräts (12).

12. Verfahren nach Anspruch 11, wobei der Aktivierungsstatus des Versorgungsmessgeräts (12) "erfolgreich aktiviert", "nicht erfolgreich aktiviert" und "bevorstehend" umfasst.

13. Verfahren nach einem der Ansprüche 11 oder 12, wobei das Mobilgerät (34) nicht zum Anbinden an das Versorgungsmessgerät konfiguriert ist.

14. Verfahren nach einem der Ansprüche 11, 12 oder 13, wobei:
das Empfangen (186) einer Benachrichtigung vom Zugangspunkt (26) das Empfangen von Information vom Zugangspunkt (26) über ein öffentliches oder privates Weitbereichsnetz umfasst, und/oder
das Aktivieren des Versorgungsmessgeräts (12) das Senden von Aktivierungsinformation an das Versorgungsmessgerät (12) umfasst.

15. Computerprogramm, das Computerprogrammcode umfasst, der zum Ausführen des Verfahrens gemäß einem der Ansprüche 11 bis 14 geeignet ist, wenn er durch Computerprozessoren (52, 70, 76, 88) ausgeführt wird, die jedem des Versorgungsmessgeräts (12), des Zugangspunkts (26), des Mobilgeräts (34) und des Servers (30) zugehören.

## Revendications

1. Réseau utilitaire (10) comprenant :
un compteur utilitaire (12) configuré pour mesurer une propriété du réseau (10) une fois installé et communiquer la mesure à un serveur (30) une fois activé ;
un point d'accès (26) configuré pour se coupler par communication au compteur utilitaire (12) et configuré pour notifier au serveur (30) à quel moment le compteur utilitaire (12) a été lié au point d'accès (26) ; et
un serveur (30) couplé par communication au point d'accès (26) ;
un dispositif mobile (34) configuré pour se coupler par communication au serveur (30) et recevoir une entrée d'un utilisateur concernant l'installation du compteur utilitaire (12) à un emplacement client (20) ;
dans lequel le serveur (30) est configuré pour recevoir une notification du point d'accès (26) indiquant que le compteur utilitaire (12) a été installé et a été lié au point d'accès (26), recevoir une demande d'un utilisateur via un dispositif mobile (34) pour activer le compteur utilitaire, ajouter le compteur utilitaire (12) à une file d'attente de compteurs utilitaires à activer et, lors de l'activation du compteur utilitaire (12), envoyer une réponse à l'utilisateur via le dispositif mobile (34) de l'état d'activation du compteur utilitaire (12).

2. Réseau selon la revendication 1, dans lequel le serveur (30) est configuré pour activer la file d'attente de compteurs utilitaires.

3. Réseau selon la revendication 1 ou la revendication 2, dans lequel le dispositif mobile (34) est configuré pour recevoir des mises à jour périodiques se rapportant à au moins une partie de la file d'attente de compteurs utilitaires attendant une activation par le serveur (30).

4. Réseau selon la revendication 1, 2 ou 3, dans lequel le compteur utilitaire (12) et le point d'accès (26) sont configurés pour se coupler l'un à l'autre par communication en utilisant une technique de communication câblée, sans fil ou par ligne électrique.

5. Réseau selon l'une quelconque des revendications précédentes, dans lequel le compteur utilitaire (12) est configuré pour se lier directement au point d'accès (26) uniquement et pas à d'autres dispositifs.

6. Réseau selon l'une quelconque des revendications précédentes, dans lequel le compteur utilitaire (12) et le point d'accès (26) sont configurés pour communiquer l'un avec l'autre via un canal crypté après échange de certificats de sécurité.

7. Réseau selon l'une quelconque des revendications précédentes, dans lequel le point d'accès (26) et le serveur (30) sont configurés pour se coupler l'un à l'autre par communication via un réseau à grande distance (WAN) privé, un WAN de données cellulaires ou une de leurs combinaisons.

8. Réseau selon l'une quelconque des revendications précédentes, dans lequel le compteur utilitaire (12), le point d'accès (26) ou les deux sont configurés pour détecter un accès non autorisé ou une communication non autorisée et configurés pour notifier au serveur (30) l'accès non autorisé ou la communication non autorisée.

9. Réseau selon l'une quelconque des revendications précédentes, dans lequel le serveur (30) comprend un serveur à infrastructure de mesure avancée (AMI).

10. Réseau selon l'une quelconque des revendications précédentes, dans lequel le compteur utilitaire (12) comprend un compteur électrique et le réseau (10) comprend un réseau de distribution électrique.

11. Procédé comprenant :
la réception dans un dispositif mobile (34) d'une entrée d'un utilisateur concernant l'installation du compteur utilitaire (12) à un emplacement client (20) dans un réseau ;
la réception (182) d'instructions issues du dispositif mobile (34) dans un serveur éloigné (30) pour activer le compteur utilitaire (12) qui a été installé dans un réseau ;
l'addition (184) du compteur utilitaire (12) à une file d'attente de compteurs utilitaires à activer ;
la réception (186) d'une notification d'un point d'accès (26) que le compteur utilitaire (12) a été lié au point d'accès (26) ;
l'activation du compteur utilitaire (12), dans lequel l'activation du compteur utilitaire comprend l'établissement (188) d'une communication avec le compteur utilitaire (12) via le point d'accès (26) ; et
la communication périodique de données de mise à jour au dispositif mobile (34) concernant la file d'attente de compteurs utilitaires à activer pour indiquer un état d'activation du compteur utilitaire (12).

12. Procédé selon la revendication 11, dans lequel l'état d'activation du compteur utilitaire (12) comprend une activation couronnée de succès, une activation non couronnée de succès et une mise en attente.

13. Procédé selon la revendication 11 ou 12, dans lequel le dispositif mobile (34) n'est pas configuré pour se lier au compteur utilitaire.

14. Procédé selon la revendication 11, 12 ou 13, dans lequel :
la réception (186) d'une notification venant du point d'accès (26) comprend la réception d'informations depuis le point d'accès (26) via un réseau à grande distance public ou privé et/ou
l'activation du compteur utilitaire (12) comprend l'envoi d'informations d'activation au compteur utilitaire (12).

15. Programme d'ordinateur comprenant un code de programme d'ordinateur adapté pour effectuer le procédé selon l'une quelconque des revendications 11 à 14, lorsqu'il est exécuté par des processeurs d'ordinateurs (52, 70, 76, 88) associés à chacun du compteur utilitaire (12), du point d'accès (26), du dispositif mobile (34) et du serveur (30).
